# EUROPÄISCHE PATENTSCHRIFT

(11) **EP 3 038 968 B1**
(45) Veröffentlichungstag und Bekanntmachung des Hinweises auf die Patenterteilung: **27.09.2017**
(21) Anmeldenummer: 14755594.0
(22) Anmeldetag: 14.08.2014
(51) Int. Cl.: B66C 15/00, B66D 1/54, G01N 3/22

(54) **VORRICHTUNG ZUR ERKENNUNG DER ABLEGEREIFE EINES HOCHFESTEN FASERSEILS BEIM EINSATZ AN HEBEZEUGEN**
DEVICE FOR DETECTING THE REPLACEMENT STATE OF WEAR OF A HIGH-STRENGTH FIBRE ROPE DURING USE IN LIFTING GEAR
DISPOSITIF DE DÉTERMINATION DU MOMENT DE DÉPOSE D'UN CÂBLE DE FIBRES ULTRA-RÉSISTANT LORSQU'IL EST UTILISÉ DANS DES ENGINS DE LEVAGE

(30) Priorität: 28.08.2013 DE 102013014349; 15.10.2013 DE 102013017110
(43) Veröffentlichungstag der Anmeldung: 06.07.2016
(73) Patentinhaber: Liebherr-Components Biberach GmbH, 88400 Biberach/Riß (DE)
(72) Erfinder: MUPENDE, Ilaka, 89231 Neu-Ulm (DE); ZERZA, Horst, 88400 Biberach an der Riss (DE)
(74) Vertreter: Thoma, Michael
(86) Internationale Anmeldenummer: PCT/EP2014/002245
(87) Internationale Veröffentlichungsnummer: WO 2015/028126

(56) Entgegenhaltungen:
- WO-A1-2012/100938
- JP-A- H0 256 397
- JP-A- S58 160 841

## Beschreibung

Die vorliegende Erfindung betrifft allgemein Hebezeuge wie Krane, die anstelle von Stahlseilen hochfeste Faserseile verwenden. Die Erfindung betrifft dabei insbesondere eine Vorrichtung zur Erkennung der Ablegereife eines hochfesten Faserseils beim Einsatz an solchen Hebezeugen, mit einer Erfassungseinrichtung zur Erfassung zumindest einer Seilkenngröße sowie einer Auswerteeinheit zur Auswertung der Seilkenngröße sowie Bereitstellung eines Ablegesignals in Abhängigkeit der Seilkenngrößenauswertung.

In jüngerer Zeit wird an Kranen versucht, anstelle der bewährten und seit vielen Jahren eingesetzten Stahlseile hochfeste Faserseile aus Kunstfasern wie beispielsweise Aramidfasern (HMPA), Aramid-/Kohlefasergemischen, hochmodulare Polyethylen-Fasern (HMPE) oder Poly(p-phenylene-2,6-benzobisoxazole)-Fasern (PBO) zu verwenden. Der Vorteil solcher hochfesten Faserseile liegt in ihrem geringen Gewicht. Bei gleichen Seildurchmessern und gleichen oder höheren Zugfestigkeiten sind solche hochfesten Faserseile deutlich leichter als entsprechende Stahlseile. Insbesondere bei hohen Kranen mit entsprechend großen Seillängen kommt hierdurch eine größere Gewichtsersparnis zustande, die in die Eigenlast des Krans eingeht und zu entsprechend höheren Nutzlasten bei ansonsten unveränderter Bauart des Krans führt.

Eine nachteilige Eigenschaft derartiger hochfester Faserseile ist jedoch ihr Bruchverhalten bzw. ihr Versagen ohne deutliche, längere Vorankündigung. Während sich bei Stahlseilen der Verschleiß deutlich zeigt und ein Versagen über längere Zeit vorher ankündigt, beispielsweise durch den Bruch einzelner Stahldrähte und ein entsprechendes Aufspleißen, das einfach bemerkt wird, zeigen hochfeste Faserseile kaum Anzeichen an übermäßigem Verschleiß, die mit dem Auge einfach wahrnehmbar wären und sich über längere Zeit vor dem eigentlichen Versagen deutlich zeigen würden. Insofern bedarf es intelligenter Überwachungsmaßnahmen, um die Ablegereife von hochfesten Faserseilen rechtzeitig zu erkennen.

Aus der WO 2012/100938 A1 ist es bekannt, für die Erkennung der Ablegereife eines hochfesten Faserseils an einem Kran verschiedene Seilablegekriterien zu prüfen, die sich entsprechend der Seileinsatzzeit und Belastung verändern. Als Seilablegekriterien werden dabei der Seildurchmesser, die Querdrucksteifigkeit im Sinne der sich bei Einklemmen des Seils ergebenden Querschnittsveränderungen und die durchlaufenen Lastspielzahlen überwacht. Diese Ablegekriterien sind einzeln betrachtet hinsichtlich ihrer Aussagekraft jedoch begrenzt, so dass in einer recht komplexen Betrachtung das Zusammenspiel dieser Ablegekriterien beobachtet und ausgewertet werden muss, um tatsächlich die Ablegereife sicher zu erkennen. Weitere Krane mit Überwachung der Ablegereife des Seils sind aus den Schriften JP H02 56397 A und JP S58 160841 A bekannt.

Hiervon ausgehend liegt der vorliegenden Erfindung die Aufgabe zugrunde, eine verbesserte Vorrichtung zur Bestimmung der Ablegereife von hochfesten Faserseilen anzugeben, die Nachteile des Standes der Technik vermeidet und Letzteren in vorteilhafter Weise weiterbildet. Vorzugsweise soll eine einfache, aber doch verlässliche, präzise Bestimmung der Ablegereife erzielt werden, die die Restlebensdauer des Faserseils wirtschaftlich ausnutzt, ohne die Sicherheit zu gefährden und hierfür mit einfachen, auch unter schweren Einsatzbedingungen an Baumaschinen verlässlich arbeitenden Erfassungseinrichtungen auskommt.

Erfindungsgemäß wird die genannte Aufgabe durch eine Vorrichtung gemäß Anspruch 1 sowie einen Kran gemäß Anspruch 13 gelöst. Bevorzugte Ausgestaltungen der Erfindung sind Gegenstand der abhängigen Ansprüche.

Es wird also vorgeschlagen, die Seildrehsteifigkeit zu überwachen und die Ablegereife anhand der Seildrehsteifigkeit zu bestimmen. Die Seildrehsteifigkeit meint dabei den Widerstand bzw. das Widerstandsmoment des Seils gegenüber einem In-sich-Verdrehen des Seils. Um die Endabschnitte eines Seilstücks in Seillängsrichtung gegeneinander zu verdrehen, d.h. das Seil zu tordieren bzw. in sich zu verdrehen, ist ein bestimmtes Drehmoment aufzubringen, um die genannte In-sich-Verdrehung zu erreichen, wobei das besagte Drehmoment von der Seildrehsteifigkeit abhängt. Erfindungsgemäß umfasst die Erfassungseinrichtung Drehsteifigkeits-Bestimmungsmittel zum Bestimmen der Seildrehsteifigkeit des Seils, wobei die Auswerteeinheit das Ablegesignal in Abhängigkeit der bestimmten Seildrehsteifigkeit bereitstellt. Während es bei Stahlseilen keine wesentlichen Veränderungen der Drehsteifigkeit in Abhängigkeit der Seillaufzeit gibt, verhält sich dies bei hochfesten Faserseilen anders. Die zu Beginn des Seileinsatzes noch biegeweichen Filamente werden durch die Belastung auf Zug und Biegung allmählich entsprechend der Belastung härter und das Seil drehsteifer. Dieser Anstieg der Seildrehsteifigkeit ist gut messbar, so dass die Ablegereife verlässlich und präzise anhand der überwachten Seildrehsteifigkeit bestimmbar ist. Es zeigt sich, dass Seildrehversuche mit einem neuen Seil eine recht geringe Drehsteifigkeit ergeben, während Seile, die bis zum Bruch gefahren werden, aufgrund der langen und hohen Belastung gegen Ende eine überaus hohe Drehsteifigkeit zeigen, die um ein Vielfaches gegenüber dem Neuzustand angestiegen ist. Dieser Anstieg der Drehsteifigkeit erfolgt kontinuierlich gemeinsam mit der steigenden Lastwechselzahl und erreicht den höchsten Punkt beim Bruch des Seiles, so dass die Auswerteeinrichtung die Ablegereife relativ einfach bestimmen kann.

In Weiterbildung der Erfindung können die Drehsteifigkeits-Bestimmungsmittel einen Drallfänger umfassen, der in den Seiltrieb integriert bzw. zum Anschlagen des Seils verwendet werden kann. Ein solcher Drallfänger wird gelegentlich auch als Seilwirbel bezeichnet und umfasst in der Regel zwei Drallfängerteile, die in Seillängsrichtung, insbesondere um eine Drehachse koaxial zur Seillängsachse, zueinander verdrehbar sind, wobei ein feststehendes Drallfängerteil beispielsweise an einem Kranausleger bezüglich der Seillängsachse drehfest angelenkt sein kann, während der drehbare Drallfängerteil drehfest mit dem Seil verbunden ist. Um einen solchen an sich bekannten Drallfänger zur Bestimmung der Seildrehsteifigkeit nutzen zu können, kann in Weiterbildung der Erfindung ein Drehantrieb zum Zwangsverdrehen der beiden Drallfängerteile relativ zueinander vorgesehen, insbesondere in einen Innenraum des Drallfängers integriert sein, wobei als Drehantrieb beispielsweise ein Elektromotor, ggf. in Verbindung mit einem Getriebe Verwendung finden kann.

Der genannte Drehantrieb sitzt dabei wirkungstechnisch zwischen den beiden Drallfängerteilen und ist gegenüber beiden Drallfängerteilen rotatorisch, d.h. gegenüber einer Verdrehung um die Drallfängerachse abgestützt. Insbesondere kann dabei eine Abtriebsachse des Drehantriebs, beispielsweise eine Getriebeausgangswelle mit dem drehbaren Drallfängerteil verbunden sein, an dem das Seil drehfest angeschlagen ist, während ein Motorgehäuse am drehfesten Drallfängerteil drehfest oder zumindest nur begrenzt drehbar gelagert ist.

In Weiterbildung der Erfindung kann dem Drallfänger ein Drehmomentmesser und/oder ein Stellwinkelmesser bzw. Verdrehwinkelmesser zugeordnet sein, um das beim Zwangsverdrehen des Drallfängers aufgebrachte Drehmoment zu bestimmen bzw. den beim Zwangsverdrehen durchlaufenen Verdrehwinkel der beiden Drallfängerteile relativ zueinander zu erfassen bzw. zu bestimmen.

Die genannten Drehmoment- bzw. Drehwinkelmesser können grundsätzlich in verschiedener Weise ausgebildet sein. Beispielsweise kann in Weiterbildung der Erfindung der Drehmomentmesser in den Drehantrieb integriert sein, beispielsweise bei Verwendung eines Elektromotors dessen elektrische Stellgrößen wie Strom und Spannung erfassen, um hieraus das erzeugte Drehmoment zu bestimmen. Alternativ oder zusätzlich zu einem solchen Antriebsbetriebsgrößenmesser kann der Drehmomentmesser auch das Reaktionsmoment bestimmen, welches vom Drehantriebsgehäuse in das feststehende Drallfängerteil bzw. vom feststehenden Drallfängerteil in dessen Lagerteil beispielsweise in Form des Kranauslegers induziert wird. Alternativ oder zusätzlich kann der Drehmomentmesser auch in das Antriebsgetriebe oder das drehbare Drallfängerteil bzw. zwischen Drehantrieb und drehbarem Drallfängerteil eingebaut sein, beispielsweise in Form einer Torsionsmessbuchse oder dergleichen.

Der Stellwinkel- bzw. Drehwinkelmesser kann grundsätzlich ebenfalls verschieden ausgebildet sein, beispielsweise in den Drehantrieb bzw. dessen Antriebsmotor oder Getriebe integriert sein. Alternativ oder zusätzlich kann der Drehwinkelmesser unmittelbar die Verdrehung der beiden Drallfängerteile zueinander erfassen.

Die Seildrehsteifigkeit kann von den Drehsteifigkeits-Bestimmungsmitteln anhand der mit einer vorbestimmten Drehmoment erzielbaren Verdrehung des Seils und/oder anhand der für eine vorbestimmte Verdrehung benötigten Drehmoment bestimmt werden. In Weiterbildung der Erfindung können diese beiden Bestimmungskriterien auch in Kombination miteinander angewandt werden, insbesondere dahingehend, dass sowohl bestimmt wird, welche Kraft für eine vorbestimmte Verdrehung benötigt wird und welche Verdrehung sich bei einer vorbestimmten Drehmoment einstellt, um sich eventuell ergebende Nichtlinearitäten bei der Drehsteifigkeit zu berücksichtigen.

Um die Messung der Seildrehsteifigkeit nicht durch Zugkraftbelastungen auf das Seil zu verfälschen bzw. zu beeinflussen, umfassen die Drehsteifigkeits-Bestimmungsmittel einen Zugkrafteinsteller, der für sich wiederholende Bestimmungen der Seildrehsteifigkeit jeweils die selben Zugkraftverhältnisse am Seil einstellt. Insbesondere kann der genannte Zugkrafteinsteller eine Zugkraftentlastungseinrichtung umfassen, die das Seil von Zugkräften im Wesentlichen vollständig entlastet, wenn die Seildrehsteifigkeit bestimmt wird.

Die genannte Zugentlastungseinrichtung kann hierbei grundsätzlich verschieden ausgebildet sein. In vorteilhafter Weiterbildung der Erfindung kann die Zugentlastungseinrichtung Haltemittel zum Festhalten des Seils in Seillängsrichtung, vorzugsweise zumindest eine Seilklemme zum Klemmen des Seils umfassen, um insbesondere sich am Lasthaken befindliche Hublasten abzufangen und den auf die Seildrehsteifigkeit zu prüfenden Seilabschnitt hiervon, wobei die genannten Haltemittel beispielsweise bei einem Turmdrehkran an dessen Laufkatze vorgesehen sein können, um den Seilabschnitt zwischen Laufkatze und Drallfänger zu entlasten. Vorteilhafterweise kann die Seildrehsteifigkeitsprüfung ohne Last am Lasthaken durchgeführt werden, wobei der Lasthaken vorteilhafterweise von einer Steuereinrichtung oder gegebenenfalls auch manuell in eine vorbestimmte Hakenhöhe gefahren wird, um eine vorbestimmte Seilzugkraft durch das Eigengewicht des Seils zu erzielen und eine bestimmte Seilprüflänge zu erhalten.

In vorteilhafter Weiterbildung der Erfindung umfassen die Drehsteifigkeits-Bestimmungsmittel einen Drallkompensierer, der vor Durchführung der Seildrehsteifigkeitsprüfung einen eventuell vorhandenen Drall im Seil beseitigt bzw. zumindest stark reduziert. Üblicherweise verdrehen sich Seile in sich, die auf Seiltrommeln aufgewickelt werden bzw. um Seilumlenkrollen laufen. Um eine Verfälschung der Messung der Seildrehsteifigkeit zu vermeiden, kann vorteilhafterweise ein solcher Drall vor Durchführung der Drehsteifigkeitsprüfung beseitigt werden. Der genannte Drallkompensierer kann hierbei vorteilhafterweise ebenfalls in den zuvor beschriebenen Drallfänger integriert sein bzw. diesem zugeordnet sein. Beispielsweise kann der Drallkompensierer einen Drehrichtungssensor umfassen, mithilfe dessen die Drehrichtung bzw. Wirkrichtung des Seildralls bestimmt wird, so dass in Abhängigkeit eines entsprechenden Drehrichtungssignales der Drehantrieb betätigt werden kann, um das Seil über den Drallfänger bzw. dessen drehbares Drallfängerteil in die bestimmte Drehrichtung zu verdrehen. Gegebenenfalls kann auch die Höhe des vom Seildrall induzierten Drehmoments am Drallfänger durch einen Drehmomentsensor der vorbeschriebenen Art bestimmt werden, um den Drehantrieb solange zu betätigen, bis das erfasste bzw. bestimmte Drehmoment, das vom Seildrall induziert wird, gegen Null geht, bevor dann die Drehsteifigkeits-prüfung begonnen wird.

Die Auswerteeinrichtung zur Bereitstellung eines Ablegesignals kann dabei grundsätzlich in verschiedener Art und Weise arbeiten, beispielsweise sich einstellende Veränderungen der Seildrehsteifigkeit überwachen und/oder absolute Werte der Seildrehsteifigkeit überwachen. Insbesondere kann die genannte Auswerteeinheit derart ausgebildet sein, dass ein Ablegesignal dann bereitgestellt wird, wenn die Seildrehsteifigkeit und/oder deren Veränderung einen zugehörigen Grenzwert überschreitet.

Beispielsweise kann mit einem neuen Seil eine oder auch mehrere Referenzmessungen durchgeführt werden, so dass dann die sich im Betrieb einstellende prozentuale Veränderung der Seildrehsteifigkeit mit einem Grenzwert für die Veränderung verglichen und bei Überschreiten bzw. Erreichen dieses Grenzwerts das Ablegesignal bereitgestellt wird. Insbesondere kann das Ablegesignal bereitgestellt werden, wenn die Seildrehsteifigkeit über einen noch tolerierbaren Grenzwert hinaus ansteigt. Alternativ oder zusätzlich kann die überwachte und im Betrieb laufend bzw. zyklisch immer wieder bestimmte Seildrehsteifigkeit mit einem absoluten Grenzwert verglichen werden, der für einen bestimmten Seiltyp oder das jeweilige Seil werksseitig vorgegeben wird, um dann bei Erreichen bzw. Überschreiten dieses Grenzwerts das Ablegesignal bereitzustellen. Weiter alternativ oder zusätzlich kann das Ablegesignal bereitgestellt werden, wenn die sich durch die Messungen bestimmte Veränderung der Seildrehsteifigkeit über die Zeit betrachtet zu schnell und/oder zu langsam erfolgt, d. h. die Veränderungsgeschwindigkeit der Seildrehsteifigkeit einen Grenzwert überschreitet oder unterschreitet. Die Veränderungsgeschwindigkeit über die Zeit kann dabei die Veränderungsgeschwindigkeit über die Anzahl der Lastspiele sein, die beispielsweise mit einem Lastspielzähler erfasst und von der Auswerteeinrichtung berücksichtigt werden können. Alternativ oder zustätzlich kann die Veränderungsgeschwindigkeit auch nur anhand der Anzahl der Messungen der Seildrehsteifigkeit berücksichtigt werden, beispielsweise dahingehend, dass ein Ablegesignal bereitgestellt wird, wenn die nach einer bestimmten Anzahl von Messungen, beispielsweise nach der zehnten Messung festgestellte Veränderung der Seildrehsteifigkeit einen hierfür vorbestimmten Grenzwert überschreitet.

Das Ablegesignal kann dem Kranführer einfach angezeigt werden, beispielsweise akustisch und/oder visuell, oder es kann dazu verwendet werden, den Seiltrieb stillzusetzen.

Die Drehsteifigkeits-Bestimmungsmittel können in vorteilhafter Weiterbildung der Erfindung im Seiltrieb des Hebezeugs fest eingebaut sein, um laufend im Betrieb - d. h. im betriebsbereiten Zustand des Hebezeugs - die Seildrehsteifigkeit bestimmen zu können, ohne das Hebezeug in einen speziellen Prüfrüstzustand umbauen zu müssen. Alternativ oder zusätzlich können die Drehsteifigkeits-Bestimmungsmittel auch als abnehmbare Einheit zum Einsatz kommen, um an verschiedenen Hebezeugen verwendet werden zu können.

Die Erfindung wird nachfolgend anhand eines bevorzugten Ausführungsbeispiels und zugehörigen Zeichnungen näher erläutert. In den Zeichnungen zeigen:
- Fig. 1:: eine schematische Darstellung eines erfindungsgemäßen Hebezeugs in Form eines Turmdrehkrans nach einer vorteilhaften Ausführung der Erfindung, dessen Hubseil und/oder dessen Abspannseile für den wippbaren Ausleger als Faserseile ausgebildet sein können, wobei die Drehsteifigkeitsbestimmungsmittel das Ende eines von einer Seiltrommel ablaufenden und über eine Laufkatze geführten Hubseils am Ausleger des Krans anschlagen,
- Fig. 2:: eine schematische Darstellung eines erfindungsgemäßen Hebezeugs in Form eines Turmdrehkrans nach einer weiteren vorteilhaften Ausführung der Erfindung, dessen Ausleger wippbar ist, wobei das von einer Seiltrommel ablaufende Hubseil über die Auslegerspitze abläuft und die Drehsteifigkeitsbestimmungsmittel das Seilende am Auslegerende anschlagen,
- Fig. 3:: eine schematische Darstellung des in den Seiltrieb des Hubseils des Krans aus Fig. 1 integrierten Drallfängers der Drehsteifigkeits-Bestimmungsmittel in einem Längsschnitt, der den Drehantrieb des Drallfängers zeigt, und
- Fig. 4:: einen Querschnitt durch den Drehantrieb des Drallfängers der Drehsteifigkeits-Bestimmungsmittel, wobei die Drehmomentabstützung und der den Drehantrieb zugewandte Drehmomentmesser gezeigt wird.

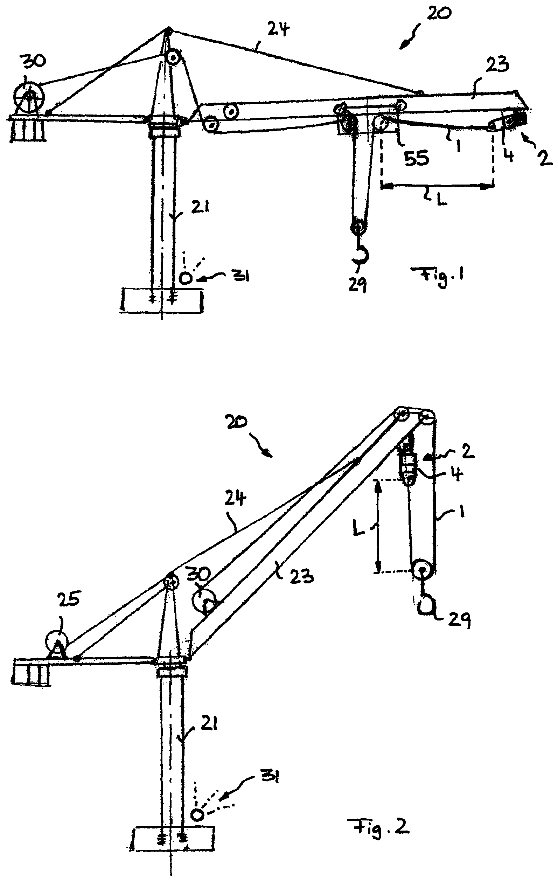

Fig. 1 zeigt beispielhaft für ein Hebezeug nach einer vorteilhaften Ausführung der Erfindung einen Kran in Form eines oben drehenden Turmdrehkrans 20, dessen Turm 21 auf einem Wagen oder einer feststehenden Basis gelagert ist. An dem Turm 21 ist in an sich bekannter Weise ein Ausleger 23 angelenkt und über eine Abspannung 24 abgespannt. Die genannte Abspannung 24 kann starr, beispielsweise in Form von Abspannstangen ausgebildet sein, aber auch verstellbar in Form einer Seileinscherung ausgebildet sein, die über eine Abspannseilwinde 25 in ihrer Länge veränderbar sein kann, so dass der Ausleger 23 in seinem Anstellwinkel verändert werden kann, wie dies Fig. 2 zeigt.

Wie Fig. 1 zeigt, kann der Turmdrehkran 20 dabei mit einem Laufkatzenausleger versehen sein. An dem vorgenannten in der Betriebsstellung liegend, insbesondere horizontal ausgerichteten Ausleger 23 ist eine Laufkatze 55 verfahrbar gelagert, wobei die genannte Laufkatze 55 beispielsweise mittels eines Laufkatzenseils verfahren werden kann, das über Umlenkrollen an der Auslegerspitze geführt sein kann.

Ferner umfasst der Turmdrehkran ein Hubseil 1, das über Umlenkrollen an der Auslegerspitze von der Spitze des Auslegers herabgelassen werden kann und dort mit einem Kranhaken 29 verbunden ist, wie dies Fig. 2 zeigt, oder in der Ausführung nach Fig. 1 über die besagte verfahrbare Laufkatze 55 und dort vorgesehene Umlenkrollen ablaufen und mit dem Kranhaken 29 verbunden sein kann. Das genannte Hubseil 1 läuft in beiden Fällen auf eine Hubwinde 30 auf.

Das genannte Hubseil 1 und/oder das Abspannseil können hierbei als Faserseil ausgebildet sein, das aus Kunstfasern wie beispielsweise Aramidfasern oder einem Aramid-/Kohlefasergemisch bestehen kann.

In beiden Fällen kann das genannte Hubseil 1 mittels eines Drallfängers 4 an dem Ausleger 23 des Krans angeschlagen sein.

Um für die Ablegereife relevante Kenngrößen des genannten Faserseils überwachen bzw. erfassen zu können, ist eine Erfassungseinrichtung vorgesehen, die am Kran angeordnet sein kann und zusammen mit einer Auswerteeinrichtung 3, die die erfassten Kenngrößen auswertet, mit der elektronischen Kransteuereinheit 31 verbunden oder in diese integriert sein kann.

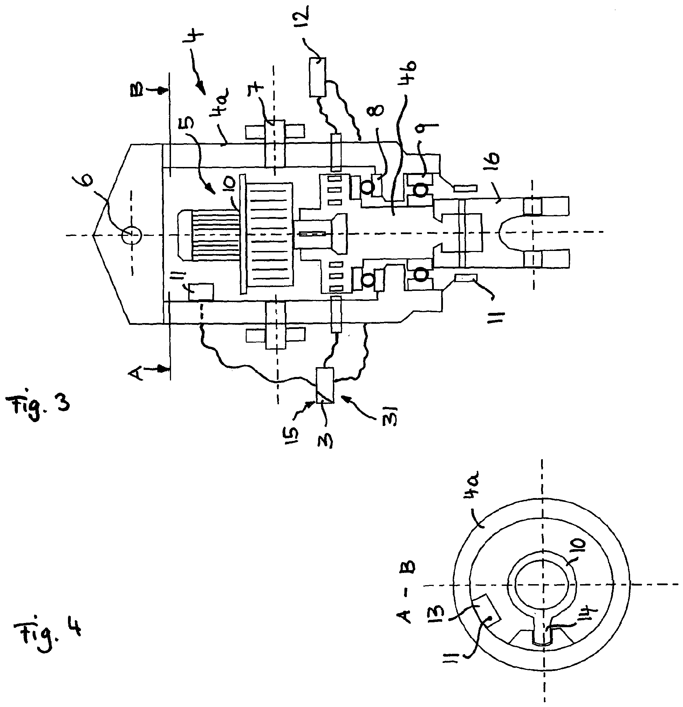

Wie die Fig. 2 und 3 zeigen, umfassen die Drehsteifigkeits-Bestimmungsmittel 2 vorteilhafterweise den zuvor genannten Drallfänger 4, der in Fig. 3 und 4 näher gezeigt ist. Der genannte Drallfänger 4 umfasst zwei Drallfängerteile 4a und 4b, die relativ zueinander in Seillängsrichtung verdrehbar sind. Der Drallfängerteil 4a bildet dabei einen feststehenden bzw. drehfesten Drallfängerteil, der bezüglich der Seillängsrichtung drehfest am Ausleger 23 gelagert ist. Hierbei kann eine pendelnde, hängende bzw. aufrechte Anordnung über eine erste Lagerachse 6 oder eine liegende, ebenfalls pendelnde Anordnung über die zweite Lagerachse 7 vorgesehen sein, die Pendel- bzw. Schwenkbewegungen quer zur Seillängsrichtung zulassen, eine Verdrehung des Drallfängerteils 4a in Seillängsrichtung jedoch unterbinden.

Der andere Drallfängerteil 4b bildet den verdrehbaren Drallfängerteil, an dem das Seil 1 drehfest befestigt ist. Der genannte drehbare Drallfängerteil 4b kann beispielsweise über Wälzlager, beispielsweise in Form eines Axiallagers 8 und eines Radiallagers 9 am feststehenden Drallfängerteil 4a um die Seillängsrichtung drehbar gelagert sein.

Der drehbare Drallfängerteil 4b kann vorteilhafterweise mit einem Drehantrieb 5 verbunden sein, der vorteilhafterweise im Inneren des Drallfängers 4 untergebracht sein kann. Hierfür kann beispielsweise der feststehende Drallfängerteil 4a glocken- oder hülsenförmig ausgebildet sein, um einen Aufnahmeraum für den Drehantrieb 5 zu schaffen. Eine umgekehrte Ausbildung mit glockenförmiger bzw. hülsenförmiger Konturierung des drehbaren Drallfängerteils 4b, der dann den feststehenden Drallfängerteil 4a umschließen könnte, kann jedoch ebenfalls vorgesehen sein.

Der genannte Drehantrieb 5 kann beispielsweise einen Elektromotor umfassen, der optional über ein Getriebe oder auch direkt mit einer Ausgangswelle drehfest mit dem drehbaren Drallfängerteil 4b verbunden ist. Ein Antriebsgehäuse 10 des Drehantriebs 5 kann gegen Verdrehung an dem feststehenden Drallfängerteil 4a gesichert sein, beispielsweise mittels einer oder mehrerer Drehmomentstützen 14, die über Anschläge oder andere geeignete Lagerkonturen an dem Drallfängerteil 4a abgestützt sein können, vgl. Fig. 4.

Wie die Figuren 3 und 4 zeigen, ist der Drallfänger 4 über den genannten Drehantrieb 5 hinaus messtechnisch ausgerüstet, um den Verdrehwinkel der beiden Drallfängerteile 4a und 4b bei einer Relativverdrehung zueinander sowie das für eine Verdrehung der beiden Drallfängerteile 4a und 4b notwendige Drehmoment und auch die jeweilige Drehrichtung zu erfassen. Die hierfür vorgesehenen Stellwinkelmesser 12, Drehmomentmesser 11 und Drehrichtungsmesser 13 können grundsätzlich verschieden ausgebildet sein und beispielsweise Betriebsgrößenmesser zur Bestimmung von Betriebsgrößen des Antriebsmotors des Drehantriebs 5 umfassen. Beispielsweise kann das Drehmoment aus den Betriebsgrößen Strom und Spannung des Antriebsmotors bestimmt werden. Alternativ oder zusätzlich kann der Drehmomentmesser 11 auf der zuvor genannten Drehmomentstütze 14 des Drehantriebs 5 gegenüber dem Drallfängerteil 4a zugeordnet sein, um das Drehmoment zu erfassen und dem Steuergerät 15 zur Verfügung zu stellen. Auch der genannte Drehrichtungssensor 13 kann der Drehmomentstütze 14 zugeordnet sein, beispielsweise mit dem genannten Drehmomentmesser 11 zu einer Erfassungseinheit zusammengefasst sein, die den Druck der Drehmomentstütze gegen die Anschlagskontur am Drallfängerteil 4a erfasst.

Alternativ oder zusätzlich kann der Drehmomentmesser 11 und/oder der Drehrichtungsmesser 13 auch in ein Anschlussteil 16 integriert sein bzw. diesem Anschlussteil 16 zugeordnet sein, mit dem das Seil 1 an den drehbaren Drallfängerteil 4b angeschlossen wird.

Der Stellwinkelmesser 12 bzw. ein entsprechender Drehzahlsensor kann beispielsweise an einer Schnittstelle zwischen den beiden Drallfängerteilen 4a und 4b angeordnet sein, um unmittelbar die Verdrehung der beiden Drallfängerteile zueinander zu erfassen. Alternativ oder zusätzlich kann auch ein Stellwinkelmesser 12 dem Drehantrieb 5 zugeordnet sein, oder an einer Getriebewelle bzw. der Ausgangswelle des Drehantriebs 5 angeordnet sein.

Die Drehsteifigkeit des Seils 1 kann vorteilhafterweise in folgenden Schritten bestimmt werden:
- Zunächst wird das Seil in die zu messende Position gefahren, wofür die Hubpositionsmessung des Lasthakens verwendet werden kann. Insbesondere wird der Lasthaken auf eine bestimmte Hubhöhe und gegebenenfalls die Laufkatze in eine bestimmte Stellung gefahren bzw. der Ausleger in eine bestimmte Wippstellung gebracht.
- Bei der Inbetriebnahme eines neuen Seiles wird als Referenzbasis für weitere Messungen die Drehsteifigkeit des Seils 1 im Nullzustand gemessen. Hierzu kann die festgelegte Seilprüflänge L auf einen bestimmten Wert eingestellt und abgespeichert werden, beispielsweise in dem der Lasthaken auf eine bestimmte Hubhöhe und die Laufkatze in eine bestimmte Stellung bzw. der Ausleger in eine bestimmte Wippstellung gebracht wird. Dies kann über geeignete Positions- bzw. Stellungssensoren erfasst und abgespeichert werden, um dann bei späteren Messungen die Referenzseillänge L wieder in gewünschter Weise einstellen zu können. Wie Fig. 1 zeigt, kann bei einem Turmdrehkran mit Laufkatze der geprüfte Seilabschnitt und dessen Länge L zwischen dem Drallfänger 4 und der Umlenkrolle der Laufkatze vorgesehen sein. Bei einem Turmdrehkran mit wippbarem Ausleger 23 kann der Seilabschnitt und dessen Länge L zwischen dem genannten Drallfänger und dem Lasthaken bzw. der Lasthakenflasche liegen.

- Die Prüfung kann vorteilhafterweise ohne Last am Haken erfolgen, so dass immer der gleiche Seilzug bei nachfolgenden Prüfungen vorhanden ist.
- Zu beginn einer Drehsteifigkeitsprüfung wird zunächst im Seil 1 vorhandener Drall möglichst kompensiert. Hierzu wird in der Ausgangsstellung das vom Seildrall in den Drallfänger 4 induzierte Drehmoment bestimmt, was über den zuvor beschriebenen Drehmomentmesser 11 erfolgen kann. Die Steuervorrichtung 15 steuert daraufhin den Drehantrieb 5 in Abhängigkeit des bestimmten Drehmoments und dessen Richtung so an, dass das vom Seildrall induzierte Drehmoment gegen Null geht. Dies ist dann der Ausgangspunkt der eigentlichen Drehsteifigkeitsmessung.
- In dem zuvorgenannten Abschnitt L des Seils 1 wird nun eine vorgegebene Anzahl von Umdrehungen eingeleitet und das dabei entstehende Drehmoment gemessen. Hierzu wird der Drehantrieb 5 entsprechend betätigt und das für die Verdrehung notwendige Drehmoment gemessen.
   Alternativ oder zusätzlich kann der Drehantrieb von der Steuereinrichtung 15 derart angesteuert werden, dass in das Seil 1 ein bestimmtes Drehmoment eingeleitet wird, wobei über den Stellwinkelsensor die sich einstellende Drehzahl bzw. der sich einstellende Verdrehwinkel gemessen wird. Aus den gemessenen Drehmomenten und Verdrehwinkeln wird die Seildrehsteifigkeit bestimmt. Dabei kann bei fest vorgegebener Drehzahl unmittelbar das hierfür notwendige Drehmoment als Maß für die Drehsteifigkeit verwendet werden, während bei fest vorgegebenem Drehmoment die sich einstellende Drehzahl bzw. der sich einstellende Drehwinkel als Maß für die Drehsteifigkeit verwendet werden kann. Insbesondere werden die genannten Messwerte des Drehmoments und des Drehwinkels im Speicher der Steuervorrichtung 15 abgelegt, um für nachfolgende Messungen als Referenzbasis verwendet zu werden.
   In vorgegebenen Zeitabständen - gegebenenfalls in Form einer vorgegebenen Anzahl von Lastspielen bzw. Biegewechseln, die von einem Lastspielzähler erfasst werden können - werden erneut Drehsteifigkeitsmessungen wie beschrieben durchgeführt und mit vorhergehenden Messungen, insbesondere der Einmessung des neuen Seils verglichen.
- Von der Auswerteeinrichtung 3 wird dabei in der eingangs beschriebenen Weise insbesondere ausgewertet, ob die Seildrehsteifigkeit und/oder deren Veränderung gegenüber der Einmessung des neuen Seils einen vorbestimmten Grenzwert überschreitet.
- Der maximal zulässige Grenzwert der Drehsteifigkeit bzw. der zulässigen Veränderung gegenüber der Einmessung des neuen Seiles für einen noch sicheren Kranbetrieb kann in der Steuereinrichtung 15 hinterlegt sein und bei einer Drehsteifigkeitsmessung als Vergleichsbasis herangezogen werden. Dabei kann in Weiterbildung der Erfindung bei Annäherung an den genannten Grenzwert eine Vorwarnung erfolgen, dass ein Seilwechsel notwendig ist. Bei Nichtbeachtung und Erreichen bzw. Überschreiten des genannten Grenzwerts kann die Steuervorrichtung 15 das von der Auswerteeinrichtung 3 generierte Ablegesignal zu einem automatischen Stillsetzen des Seiltriebs verwenden.
- Das Anfahren des Seilabschnittes für die Drehsteifigkeits-Bestimmung kann automatisch programmgesteuert erfolgen oder aber auch manuell.

## Patentansprüche

1. Vorrichtung zum Erkennen der Ablegereife eines hochfesten Faserseils (1) beim Einsatz an Hebezeugen, insbesondere Kran, mit einer Erfassungseinrichtung zur Erfassung zumindest einer Seilkenngröße sowie einer Auswerteeinrichtung (3) zur Auswertung der Seilkenngröße sowie Bereitstellung eines Ablegesignals in Abhängigkeit der Seilkenngrößenauswertung, **dadurch gekennzeichnet, dass** die Erfassungseinrichtung Drehsteifigkeits-Bestimmungsmittel (2) zum Bestimmen der Seildrehsteifigkeit des Seils (1) aufweist und die Auswerteeinrichtung (3) das Ablegesignal in Abhängigkeit der bestimmten Seildrehsteifigkeit bereitstellt.

2. Vorrichtung nach dem vorhergehenden Anspruch, wobei die Drehsteifkeit-Bestimmungsmittel (2) einen Drehantrieb (5) zum Verdrehen eines Seilabschnitts um einen vorbestimmten Drehwinkel und/oder mit einem vorbestimmten Drehmoment sowie Erfassungsmittel zum Erfassen des beim Verdrehen des Seilabschnitts entstehenden Drehmoments und/oder Drehwinkels umfassen, wobei die Auswerteeinrichtung (3) die Seildrehsteifigkeit in Abhängigkeit des bestimmten Drehmoments und/oder des bestimmten Drehwinkels bestimmt.

3. Vorrichtung nach einem der vorhergehenden Ansprüche, wobei die Drehsteifigkeits-Bestimmungsmittel (2) einen Drallfänger (4) mit zwei zueinander in Seillängsrichtung verdrehbaren Drallfängerteilen (4a, 4b) umfassen, die von einem/dem Drehantrieb (5) zueinander zwangsverdrehbar sind.

4. Vorrichtung nach dem vorhergehenden Anspruch, wobei der Drallfänger (4) mit einem Seilende drehfest verbunden ist und an einem Basisteil, insbesondere Kranauslegerteil, drehfest angeschlagen ist.

5. Vorrichtung nach einem der beiden vorhergehenden Ansprüche, wobei dem Drallfänger (4) ein Drehmomentmesser (11) und/oder ein Stellwinkelmesser (12) zugeordnet ist, wobei die Seildrehsteifigkeit anhand der mit einem vorbestimmten Drehmoment erzielbaren Verdrehung und/oder anhand des für eine vorbestimmte Verdrehung benötigten Drehmoments von den Drehsteifigkeits-Bestimmungsmitteln (2) bestimmbar ist.

6. Vorrichtung nach einem der vorhergehenden Ansprüche, wobei der Drehantrieb (5) in den Drallfänger (4) integriert, insbesondere in einem von einem Drallfängerteil (4a) umschlossenen Innenraum angeordnet ist.

7. Vorrichtung nach einem der vorhergehenden Ansprüche, wobei ein Drallkompensierer zum Kompensieren eines gegebenenfalls vorhandenen Seildralls vor der Bestimmung der Seildrehsteifigkeit vorgesehen ist.

8. Vorrichtung nach dem vorhergehenden Anspruch in Verbindung mit Anspruch 5, wobei der Drallkompensierer einen Steuerungsbaustein zum Ansteuern des Drehantriebs 5 in Abhängigkeit eines von dem Drehmomentmesser (11) bestimmten Drehmoments an dem Drallfänger und/oder in Abhängigkeit einer von einem Drehrichtungsmesser (13) bestimmten Drehrichtung des vom Seil (1) auf den Drallfänger (4) wirkenden Seildralls umfasst, wobei der genannte Steuerungsbaustein derart ausgebildet ist, dass der Drehantrieb (5) derart betätigbar ist, dass das vom Drehmomentmesser (11) erfasste Drehmoment gegen Null geht.

9. Vorrichtung nach einem der vorhergehenden Ansprüche, wobei der Drehmomentmesser (11) und/oder der Stellwinkelmesser (12) und/oder der Drehrichtungsmesser (13) in den Drallfänger (4) und/oder den Drehantrieb (5) integriert sind.

10. Vorrichtung nach einem der vorhergehenden Ansprüche, wobei die Drehsteifigkeits-Bestimmungsmittel (2) eine Zugeinstelleinrichtung zum automatischen Einstellen einer vorbestimmten Zugkraft in dem Seil (1) und/oder eine Längeneinstellvorrichtung zum Einstellen einer vorbestimmten Länge L des der Drehsteifigkeitsprüfung zu unterwerfenden Seilabschnitts aufweist.

11. Vorrichtung nach einem der vorhergehenden Ansprüche, wobei die Auswerteeinrichtung (3) ein Ablegesignal dann, wenn die von der Drehsteifigkeits-Bestimmungsmittel (2) bestimmte Seildrehsteifigkeit und/oder deren Veränderung einen zugehörigen Grenzwert überschreitet, bereitstellt.

12. Vorrichtung nach einem der vorhergehenden Ansprüche, wobei die Drehsteifigkeits-Bestimmungsmittel (2) Seilpositioniermittel zum automatischen Positionieren verschiedener Seilabschnitte, vorzugsweise Seilabschnitte verschiedener Längen, für die Bestimmung der Seildrehsteifigkeit an verschiedenen Seilabschnitten umfassen können.

13. Kran, insbesondere Turmdrehkran, Mobilkran, Hafenmobilkran, Schiffskran oder Fahrzeugauslegerkran, mit einer Vorrichtung zur Erkennung der Ablegereife eines hochfesten Faserseils gemäß einem der vorhergehenden Ansprüche.

14. Kran nach dem vorhergehenden Anspruch, wobei die Drehsteifigkeits-Bestimmungsmittel (2) fest installiert einem Seiltrieb des Krans zugeordnet oder als abnehmbare Einheit ausgebildet sind derart, dass die Seildrehsteifigkeit in einen für den Kranbetrieb bereiten Rüstzustand des Krans bestimmbar ist.

## Claims

1. Device for detecting the discard state of a high-tensile fiber rope (1) upon use on hoists, in particular on a crane, with a detecting device to detect at least one rope parameter as well as an evaluation unit (3) for evaluating the rope parameter as well as providing a discard signal depending on the evaluation of the rope parameter, **characterized in that** the detecting device comprises torsional stiffness determination means (2) for determining the torsional stiffness of the rope (1) and **in that** the evaluation unit (3) provides the discard signal depending on the determined torsional stiffness of the rope.

2. Device according to the preceding claim, wherein the torsional stiffness determination means (2) comprises a rotary drive (5) for twisting a rope section by a predetermined angle of rotation and/or with a predetermined torque, as well as detection device for detecting the torque and/or the angle of rotation that results from the twisting of the rope section, wherein the evaluation unit (3) determines the torsional stiffness of the rope depending on the determined torque and/or the determined angle of rotation.

3. Device according to one of the preceding claims, wherein the torsional stiffness determination means (2) comprises a swivel (4) having two swivel parts (4a, 4b) which can be twisted in relation to each other in the longitudinal direction of the rope and which can be forcibly twisted relative to one another by a/the rotary drive.

4. Device according to the preceding claim, wherein the swivel (4) is non-rotatably connected to a rope end and is non-rotatably fastened to a base part, in particular to a crane boom part.

5. Device according to one of the two preceding claims, wherein a torque meter (11) and/or a folding square meter (12) is/are assigned to the swivel (4), wherein the torsional stiffness of the rope can be determined by the torsional stiffness determination means (2) on the basis of the twist that can be achieved with a predetermined torque and/or with the torque required for a predetermined twist.

6. Device according to one of the preceding claims, wherein the rotary drive (5) is integrated in the swivel (4), in particular arranged in an interior space enclosed by a swivel part (4a).

7. Device according to one of the preceding claims, wherein a swivel compensator is provided to compensate a possibly present rope twist prior to the determination of the torsional stiffness of the rope.

8. Device according to the preceding claim in conjunction with Claim 5, wherein the swivel compensator includes a control component for controlling the rotary drive (5) depending on a torque on the swivel determined by the torque meter (11) and/or depending on a rotational direction determined by a rotational direction meter (13) of a rope twist of the rope (1) acting on the swivel (4), wherein the mentioned control component is configured such that the rotary drive (5) is operable such that the torque detected by the torque meter (11) is approaching zero.

9. Device according to one of the preceding claims, wherein the torque meter (11) and/or the folding square meter (12) and/or the rotational direction meter (13) are integrated in the swivel (4) and/or the rotary drive (5).

10. Device according to one of the preceding claims, wherein the torsional stiffness determination means (2) comprise a tension setting unit for automatically setting a predetermined tensile force in rope (1) and/or a length setting unit for setting a predetermined length L of the rope section to be subjected to the torsional stiffness test.

11. Device according to one of the preceding claims, wherein the evaluation unit (3) provides a discard signal when the torsional stiffness of the rope determined by the torsional stiffness determination means (2) and/or its change exceeds a corresponding threshold value.

12. Device according to one of the preceding claims, wherein the torsional stiffness determination means (2) can comprise rope positioning means for automatically positioning various rope sections, preferably rope sections of different lengths, for determining the torsional stiffness of the rope at different rope sections.

13. Crane, in particular tower crane, mobile crane, mobile harbor crane, ship crane or vehicle boom crane, having a device for detecting the discard state of a high-tensile fiber rope according to one of the preceding claims.

14. Crane according to the preceding claim, wherein the torsional stiffness determination means (2) is assigned to a rope drive of the crane in fixedly installed fashion or configured as a detachable unit such that the torsional stiffness of the rope can be determined in a set-up condition ready for crane operation.

## Revendications

1. Dispositif d'identification de l'état d'usure d'un câble fibre (1) hautement résistant lors de l'utilisation sur des engins de levage, notamment sur une grue, comprenant un dispositif d'enregistrement destiné à enregistrer au moins une caractéristique de câble ainsi qu'un dispositif d'évaluation (3) destiné à évaluer la caractéristique de câble ainsi qu'à fournir un signal d'usure en fonction de l'évaluation de la caractéristique de câble, **caractérisé en ce que** le dispositif d'enregistrement présente des moyens de détermination (2) de la rigidité à la torsion destinés à déterminer la rigidité à la torsion du câble(1) et **en ce que** le dispositif d'évaluation (3) fournit le signal d'usure en fonction de la rigidité à la torsion déterminée.

2. Dispositif selon la revendication précédente, les moyens de détermination (2) de la rigidité à la torsion comprenant un entraînement rotatif (5) destiné à tordre une section de câble d'un angle de rotation prédéterminé et/ou avec un moment de torsion prédéterminé, ainsi que des moyens d'enregistrement destinés à enregistrer le moment de torsion se produisant lors de la torsion de la section de câble et/ou l'angle de rotation, le dispositif d'évaluation (3) déterminant la rigidité à la torsion du câble en fonction du moment de torsion déterminé et/ou de l'angle de rotation déterminé.

3. Dispositif selon l'une quelconque des revendications précédentes, les moyens de détermination (2) de la rigidité à la torsion comprenant un émerillon (4) muni de deux parties d'émerillon (4a, 4b) pouvant être tournées l'une par rapport à l'autre en direction longitudinale du câble, lesquelles sont entraînables en rotation l'une par rapport à l'autre par un/l'entraînement rotatif (5).

4. Dispositif selon l'une quelconque des revendications précédentes, l'émerillon (4) étant raccordé à une extrémité de câble de manière résistante à la torsion et étant monté sur une pièce de base, notamment une pièce de flèche de grue, de manière résistante à la torsion.

5. Dispositif selon l'une quelconque des deux revendications précédentes, un torsiomètre (11) et/ou un mesureur d'angle de réglage (12) étant associés à l'émerillon (4), la rigidité à la torsion du câble étant déterminable par les moyens de détermination (2) de la rigidité à la torsion à l'aide de la torsion pouvant être obtenue avec un moment de torsion prédéterminé et/ou à l'aide du moment de torsion nécessaire pour une torsion prédéterminée.

6. Dispositif selon l'une quelconque des revendications précédentes, l'entraînement rotatif (5) étant intégré dans l'émerillon (4), notamment dans un espace intérieur entouré par une partie d'émerillon (4a).

7. Dispositif selon l'une quelconque des revendications précédentes, un compensateur de torsion destiné à compenser une torsion de câble éventuellement présente avant la détermination de la rigidité à la torsion du câble étant ménagé.

8. Dispositif selon l'une quelconque des revendications précédentes en liaison avec la revendication 5, le compensateur de torsion comprenant un module de commande destiné à commander l'entraînement rotatif (5) en fonction d'un moment de torsion déterminé par le torsiomètre(11) sur l'émerillon et/ou en fonction d'un sens de rotation, déterminé par un mesureur de sens de rotation, de la torsion de câble agissant par le câble (1) sur l'émerillon (4), ledit module de commande étant réalisé de manière à ce que l'entraînement rotatif (5) soit actionnable de sorte que le moment de torsion enregistré par le torsiomètre aille vers zéro.

9. Dispositif selon l'une quelconque des revendications précédentes, le torsiomètre (11) et/ou le mesureur d'angle de réglage (12) et/ou le mesureur du sens de rotation (13) étant intégrés dans l'émerillon (4) et/ou dans l'entraînement rotatif (5).

10. Dispositif selon l'une quelconque des revendications précédentes, les moyens de détermination (2) de la rigidité à la torsion présentant un dispositif de réglage de traction pour le réglage automatique d'une force de traction prédéterminée dans le câble (1) et/ou un dispositif de réglage de longueur pour régler une longueur L prédéterminée de la section de câble à soumettre au contrôle de rigidité à la torsion.

11. Dispositif selon l'une quelconque des revendications précédentes, le dispositif d'évaluation (3) fournissant un signal de sortie lorsque la rigidité à la torsion du câble, déterminée par les moyens de détermination (2) de la rigidité à la torsion, et/ou sa modification dépassent une valeur limite correspondante.

12. Dispositif selon l'une quelconque des revendications précédentes, les moyens de détermination (2) de la rigidité à la torsion pouvant comprendre des moyens de positionnement de câble pour le positionnement automatique de différentes sections de câble, de préférence des sections de câble de différentes longueurs, pour la détermination de la rigidité à la torsion du câble sur différentes sections de câble.

13. Grue, notamment grue à tour, grue mobile, grue portuaire mobile, grue pour bateaux ou grue à flèche pour véhicules automobiles, comprenant un dispositif d'identification de l'état d'usure d'un câble fibre hautement résistant selon l'une quelconque des revendications précédentes.

14. Grue selon la revendication précédente, les moyens de détermination (2) de la rigidité à la torsion étant réalisés de manière associée, par installation fixe, à une transmission de câble de la grue ou comme unité amovible, de façon à ce que la rigidité à la torsion du câble soit déterminable dans un état d'équipement de la grue prêt au fonctionnement de la grue.
